# FASCICULE DE BREVET EUROPEEN

(11) **EP 2 589 254 B1**
(45) Date de publication et mention de la délivrance du brevet: **21.10.2015**
(21) Numéro de dépôt: 11744047.9
(22) Date de dépôt: 27.06.2011
(51) Int. Cl.: H04W 74/08

(54) **RÉGULATION D'ÉMISSION DANS UN RÉSEAU DE TÉLÉCOMMUNICATION**
ÜBERTRAGUNGSSTEUERUNG IN EINEM TELEKOMMUNIKATIONSNETZWERK
TRANSMISSION CONTROL IN A TELECOMMUNICATION NETWORK

(30) Priorité: 30.06.2010 FR 1002737
(43) Date de publication de la demande: 08.05.2013
(73) Titulaire: Orange, 75015 Paris (FR)
(72) Inventeur: BROWN, Patrick, F-06800 Cagnes Sur Mer (FR); GALTIER, Jérôme, F-06000 Nice (FR)
(74) Mandataire: Delumeau, François Guy
(86) Numéro de dépôt international: PCT/FR2011/051488
(87) Numéro de publication internationale: WO 2012/001285

(56) Documents cités:
- WO-A1-2007/051946
- WO-A1-2009/095628

## Description

### Arrière plan de l'invention

La présente invention concerne le domaine des réseaux de télécommunication sans fil, en particulier des réseaux locaux sans fil ou WLAN (de l'anglais « Wireless Local Access Network ») conformes à la famille de normes IEEE 802.11.

De tels réseaux sont également nommés réseaux WI-FI. Ils sont utilisés pour mettre en réseau, dans de nombreuses applications, des stations (par exemple des ordinateurs, des assistants personnels et des périphériques).

La norme 802.11 définit dans le document « IEEE 802.11 a-1999, IEEE 802.11 b-1999, IEEE 802.11 d-2001, Part 11 : wireless LAN medium access control (MAC) and physical layer (PHY) spécifications un procédé de régulation du trafic dans le réseau sans fil. Ce procédé utilise un système de fenêtre de congestion (Congestion Window « CW ») pour réguler ce trafic. Selon cette norme, pour déterminer l'instant auquel émettre un paquet de données, une station tire un nombre aléatoire au hasard entre 0 et CW-1, la valeur CW étant un entier compris entre deux valeurs CWₘᵢₙ et CWₘₐₓ spécifiées par la norme 802.11.

Cette valeur CW sert de compteur à rebours pour l'émission du paquet, ce compteur étant différé si la station constate qu'une autre station est en train d'émettre. Malheureusement, ce système à fenêtre de congestion génère un nombre important de collisions sur le réseau sans fil, ce qui se traduit, du point de vue de l'utilisateur, par une perte importante de bande passante.

Un mécanisme connu sous le nom « méthode des tournois » est susceptible d'être utilisé par les différentes stations pour réguler les émissions de paquets et limiter le taux de collision. Cette méthode des tournois est décrite dans le document des auteurs Z. Abichar et M. Chang, intitulé « CONTI : Constant Time Contention Resolution for WLAN Access », IFIP Networking 2005.

La méthode des tournois consiste à organiser une sorte de tournoi entre les stations ayant au moins un paquet à émettre. Un tournoi est composé d'un certain nombre de tours de sélection exécuté chacun pendant un intervalle de temps de durée prédéfinie permettant à chaque station d'avoir le temps d'entendre l'émission de toute autre. Cette durée peut typiquement être égale à la durée de l'intervalle de temps nommé « SlotTime » qui selon le standard IEEE 802.11, est définie comme intervalle élémentaire dans la procédure de résolution de contention par fenêtre de congestion. Au début du tournoi, toutes les stations ayant à émettre un paquet sont susceptibles d'être autorisées à émettre ce paquet. A chaque tour de sélection, une ou plusieurs stations sont susceptibles d'être supprimées de la liste des stations autorisées à émettre, selon qu'une autorisation ou une interdiction d'émettre leur est attribuée lors de ce tour de sélection. A l'issue du tournoi, seules les stations non éliminées sont autorisées à émettre. Si plusieurs stations restent en lice à l'issue du tournoi, elles émettent en même temps provoquant ainsi une collision et donc une réception perturbée avec impossibilité de recevoir correctement le paquet de données émis. Ces stations devront alors participer au tournoi suivant pour tenter d'émettre à nouveau ces paquets.

Le protocole Hiperlan est un des premiers protocoles intégrant la fonctionnalité de tournois.

Pour plus de renseignements, l'homme de métier peut se référer au document des auteurs Philippe Jacquet, Pascale Minet, Paul Mühlethaler et Nicolas Rivierre « Priority and Collision Détection with Active Signaling - The Channel Access Mechanism of HIPERLAN, Wireless Personnal Communications 4 : 11-26, 1996.

Les documents FR 2 893 206 et WO 2009/095628 expliquent respectivement comment améliorer considérablement l'efficacité des tournois en faisant dépendre les probabilités de tirage de l'historique du tournoi et comment garantir aux stations des temps d'accès bornés pour le transfert de flux synchrones dans des réseaux sans fil avec une bonne qualité de service.

Toutefois, la Demanderesse a constaté que les réseaux qui mettent en oeuvre une méthode des tournois peuvent souffrir d'un mauvais taux d'utilisation de la bande passante, la durée d'exécution du protocole de résolution de contention pouvant représenter, par exemple dans l'exemple d'un tournoi à 6 tours, de l'ordre de 25% du temps nécessaire à l'émission d'une trame de données sur un réseau IEEE 802.11n.

### Objet et résumé de l'invention

La présente invention vise un procédé de régulation d'émission mettant en oeuvre une méthode à tournoi qui ne présente pas les inconvénients des procédés connus de l'art antérieur.

Plus particulièrement, l'invention concerne un procédé de régulation d'émission pouvant être mis en oeuvre par une station ayant au moins une trame de données à émettre via un réseau de télécommunication sans fil, le procédé comportant, à chaque tour de sélection d'un nombre maximal de tours de sélection :
- une étape d'obtention d'une valeur représentative soit d'une autorisation d'émettre soit d'une interdiction d'émettre ladite trame ; et lorsque ladite valeur est représentative d'une autorisation d'émettre :
- une étape d'émission d'un signal d'information dans ledit réseau, pour indiquer aux autres stations que ladite station a obtenu une valeur représentative d'une autorisation d'émettre.

Selon ce procédé, l'émission du signal d'information précité est effectuée au moins en partie pendant l'émission d'une trame de données dans le réseau.

Corrélativement, l'invention vise un dispositif de régulation d'émission pour une station ayant au moins une trame de données à émettre via un réseau de télécommunication sans fil, le dispositif comportant :
- des moyens pour obtenir, à chacun d'une pluralité d'un nombre maximal de tours de sélection, une valeur représentative soit d'une autorisation d'émettre soit d'une interdiction d'émettre ladite trame ; et lorsque ladite valeur est représentative d'une autorisation d'émettre :
- des moyens d'émission d'un signal d'information dans ledit réseau, pour indiquer aux autres stations que ladite station a obtenu une valeur représentative d'une autorisation d'émettre.

Les moyens d'émission de ce dispositif sont aptes à émettre le signal d'information précité au moins en partie pendant l'émission d'une trame de données dans le réseau.

Ainsi, et d'une façon générale, l'invention permet d'émettre des éléments d'information liés au tournoi pendant l'émission de trame de données.

L'invention permet ainsi d'utiliser efficacement la bande passante sur le réseau de télécommunication sans fil, d'une part parce qu'il n'est pas nécessaire d'attendre un temps de silence avant de commencer le tournoi et d'autre part parce que le tournoi lui-même ne retarde pas l'émission d'une trame de données.

En effet, dans un tournoi classique, bien que le volume d'information nécessaire au tournoi lui-même soit très limité, le temps nécessaire à la transmission de ces informations occupe beaucoup de temps relativement au temps pris pour l'émission des trames de données, l'art antérieur imposant d'attendre un silence avant l'envoi de ces éléments d'information.

Différentes possibilités peuvent être mises en oeuvre en conformité avec l'invention.

Dans un premier mode de réalisation de l'invention, l'émission du signal d'information est effectuée en utilisant une bande de fréquences suffisamment éloignée de celle utilisée pour l'émission des trames de données pour qu'une station puisse simultanément émettre le signal d'information du tournoi tout en étant capable de recevoir une trame de données.

Dans ce premier mode de réalisation de l'invention, il n'y a donc pas de précaution particulière pour envoyer l'élément d'information du tournoi.

En particulier, si l'électronique et en particulier les filtres de la station le permettent, on peut utiliser une bande de fréquences en bordure de la bande de fréquences utilisée pour émettre les trames de données. Dans le cas d'un réseau IEEE 802.11n, il existe, en effet, dans la bande de fréquences 2,4 GHZ des bandes de 2 MHZ non utilisées entre les canaux non superposés d'émission de trame. De la même façon, dans le cas des réseaux IEEE 802.11a et IEEE 802.11n, les bandes de fréquence [5,15 - 5,17] GHZ et [5,33 - 5,35] GHZ, de 20 MHZ chacune, ne sont pas utilisées.

Ces bandes de fréquences peuvent donc être utilisées, conformément à ce premier mode de réalisation de l'invention, pour émettre les éléments d'information du tournoi.

Dans un deuxième mode de réalisation de l'invention, l'émission de l'élément d'information est effectuée en utilisant la bande de fréquences utilisée pour l'émission des trames de données ; par conséquent, les stations qui décident de participer au tournoi ne sont pas en mesure d'émettre les éléments d'information du tournoi tout en recevant des trames de données.

Dans ce deuxième mode de réalisation la station attend donc d'avoir reçu l'adresse du destinataire comprise dans la trame de données afin de déterminer si elle est destinataire de cette trame, pour initier, lorsque ce n'est pas le cas, l'émission du signal d'information du tournoi pendant la réception de la fin de la trame.

Le signal d'information doit être signé avec une signature propre aux signaux d'information relatifs à un tournoi pour pouvoir être distingué des trames de données par les autres stations.

A titre d'exemple de signature propre, on peut utiliser un code CDMA particulier ou une forme d'onde particulière.

Préférentiellement la station attend en outre la réception de la durée de la trame de données pour attendre une trame de données suffisamment longue pendant laquelle le signal d'information pourra être émis dans son intégralité.

Dans un troisième mode de réalisation de l'invention, l'émission du signal d'information est effectuée avec une puissance comparable au niveau du bruit en utilisant la totalité des canaux de la bande de fréquences utilisée pour l'émission des trames de données, sachant qu'au moins un de ces canaux n'est pas utilisé pour l'émission des trames de données.

Dans ce troisième mode de réalisation, le signal d'information est noyé dans les canaux actifs mais peut être détecté dans les autres canaux.

Dans un quatrième mode de réalisation de l'invention, on réduit le nombre maximal de tours de sélection à effectuer si la durée de l'émission de la trame de données est inférieure à la durée du nombre maximal de tours de sélection.

Dans un cinquième mode particulier de réalisation de l'invention, l'émission du signal d'information du tournoi commence ou se prolonge après la fin de l'émission d'une trame de données.

En effet, il est usuel, de prévoir, dans un réseau de télécommunication sans fil, un temps de silence incompressible entre la fin de l'émission d'une trame de données et le début de l'émission de la trame suivante.

En particulier, dans un réseau Wifi en mode distribué, les stations attendent un temps incompressible de 34 microsecondes appelé « DIFS » après l'émission d'une trame, et comptent, après ce temps incompressible, un temps aléatoire constitué par un nombre entier de slots (de 9 microsecondes) avant de pouvoir émettre la trame de données suivantes.

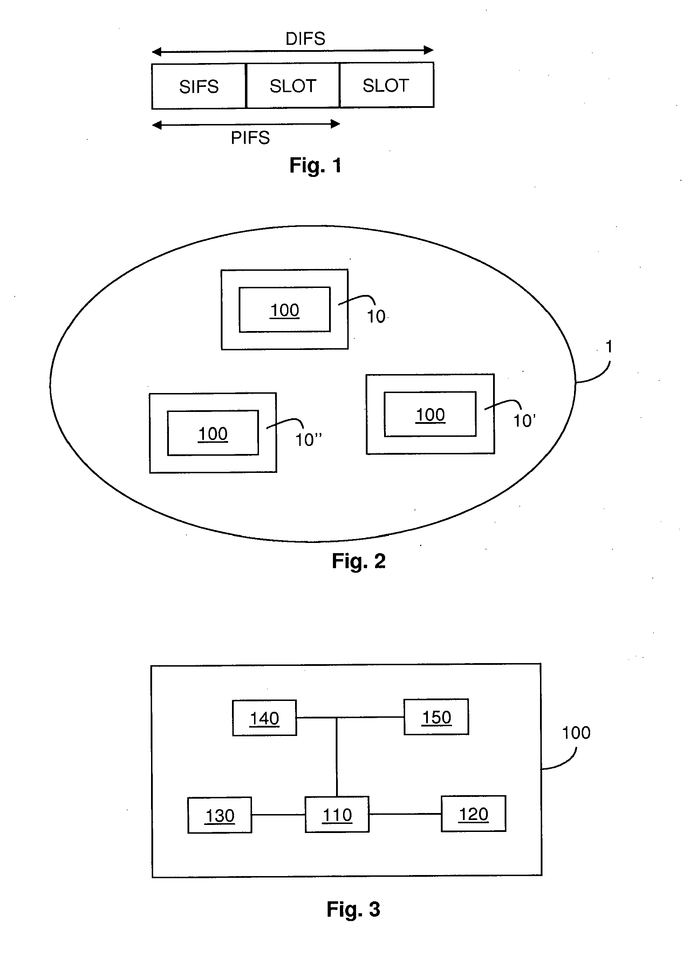

La **figure 1** illustre la durée DIFS précitée. Elle commence par une durée SIFS à l'issue de laquelle une trame d'acquittement ACK peut être émise. Sachant qu'aucune trame de données ne peut être émise à l'issue de la durée SIFS ; cette trame d'acquittement ne peut faire l'objet d'une collision.

On rappelle que le mode PCF prévoit qu'une station "maître" est autorisée à émettre un paquet au bout de PIFS, ce qui lui permet de prendre possession du canal sans risquer de collision.

En Wifi, ce mode n'est pas implémenté, car il est en pratique impossible de garantir qu'une seule station "maître" émette sur ce canal.

Par conséquent, l'invention propose un sixième mode de réalisation dans lequel l'émission des signaux d'information du tournoi commence ou redémarre, après un temps de silence déterminé (par exemple PIFS) compté à partir de la fin de l'émission d'une trame de données.

Dans ce sixième mode de réalisation l'émission du signal d"information est effectuée avec une puissance permettant aux autres stations de détecter l'occupation du canal de transmission.

Cette caractéristique permet aux autres stations qui écoutent le réseau, de détecter la fin de l'émission des éléments du tournoi de sorte qu'elles peuvent suspendre l'émission de leur prochaine trame de données évitant ainsi une collision.

Quoi qu'il en soit, à la fin du tournoi, la ou les stations gagnantes peuvent émettre une trame de données lors de la première période de disponibilité du canal radio suivant l'émission de la trame pendant laquelle le tournoi a eu lieu.

Dans le cas d'un réseau conforme à la norme IEEE 802.11, la station attend la prochaine intervalle de durée PIFS.

Si le tournoi se termine après un intervalle sans émission de durée supérieure à PIFS, la ou les stations gagnantes peuvent émettre dès la fin du tournoi.

Dans un mode de réalisation, les différentes étapes du procédé de régulation selon l'invention sont déterminées par des instructions de programme d'ordinateur.

En conséquence, l'invention vise aussi un programme d'ordinateur sur un support d'information, ce programme étant susceptible d'être mis en oeuvre dans une station ou plus généralement dans un ordinateur, ce programme comportant des instructions adaptées à la mise en oeuvre des étapes d'un procédé de résolution tel que décrit ci-dessus.

Ce programme peut utiliser n'importe quel langage de programmation et être sous la forme de code source, code objet ou de code intermédiaire entre code source et code objet, tel que dans une forme partiellement compilée ou dans n'importe quelle autre forme souhaitable.

L'invention vise aussi un support d'information lisible par un ordinateur et comportant des instructions d'un programme d'ordinateur tel que mentionné ci-dessus.

Le support d'information peut être n'importe quelle entité ou dispositif capable de stocker le programme.

Par exemple, le support d'information peut comporter un moyen de stockage tel qu'une ROM, par exemple un CD ROM ou une ROM de circuit microélectronique ou encore un moyen d'enregistrement magnétique, par exemple une disquette (floppy disk) ou un disque dur.

D'autre part, le support d'information peut être un support transmissible tel qu'un signal électrique ou optique, qui peut être acheminé via un câble électrique ou optique, par radio ou par d'autres moyens.

Le programme selon l'invention peut être en particulier téléchargé sur un réseau de type Internet.

Alternativement le support d'information peut être un circuit intégré dans lequel le programme est incorporé, le circuit étant adapté ou pour être utilisé dans l'exécution du procédé en question.

Selon une autre implémentation, l'invention est mise en oeuvre au moyen de composants logiciels et/ou matériels. Dans cette optique, le terme module peut correspondre dans ce document aussi bien à un composant logiciel qu'à un composant matériel. Un composant logiciel correspond à un ou plusieurs programmes d'ordinateur, un ou plusieurs sous-programmes d'un programme ou de manière plus générale à tout élément d'un programme conçu pour mettre en oeuvre une fonction ou un ensemble de fonctions. Un composant matériel correspond à tout élément d'un ensemble matériel (ou hardware) conçu pour mettre en avant une fonction ou un ensemble de fonctions.

### Brève description des dessins

D'autres buts, caractéristiques et avantages de l'invention, apparaitront à travers la description qui va suivre, donnée uniquement à titre d'exemple non limitative et faite par référence aux dessins annexés dans lesquels :
- la figure 1 déjà décrite représente une durée PIFS utilisée dans un réseau IEEE 802.11 ;
- la figure 2 représente un réseau de télécommunication sans fil, avec des stations conformes à l'invention dans un mode particulier de réalisation ;
- la figure 3 représente un dispositif de régulation d'émission conforme à l'invention dans un mode particulier de réalisation ;
- les figures 4 et 5 représentent, sous forme d'organigramme, les principales étapes d'un procédé de régulation d'émission conforme à l'invention dans un mode particulier de réalisation ; et
- la figure 6 illustre le gain de bande passante par la mise en oeuvre d'un mode particulier de réalisation de l'invention.

### Description détaillée de modes de réalisation de l'invention

La **Figure 2** représente un réseau 1 de télécommunication sans fil dans lequel évoluent des stations 10, 10', 10" conformes à l'invention.

Chacune de ces stations 10 comportent un dispositif de régulation d'émission 100 conforme à l'invention.

Dans le mode décrit à la **Figure 3****,** le dispositif de régulation 100 selon l'invention comporte un processeur 110 une mémoire 120, une mémoire morte de type ROM 130, un module 140 d'accès au réseau 1 pour émettre et recevoir des paquets et des signaux dans le réseau télécommunication sans fil 1.

Ces différents éléments sont reliés entre eux par un système de bus non référencé.

Les moyens 140 pour envoyer et recevoir des paquets de données des signaux sur le réseau de communication sans fil 1 sont, dans l'exemple décrit ici, constitués par une carte d'accès au réseau 1 conforme à la famille de norme IEEE 802.11.

Pour la mise en oeuvre de l'invention, il est fait usage de la méthode des tournois citée en introduction.

Dans la méthode des tournois, telle que décrite par CONTI dans le document référencé ci-dessus, les autorisations ou interdictions d'émettre sont attribuées aux stations en utilisant des variables aléatoires binaires ayant une loi de distribution de Bernouilli.

Cette loi de distribution est définie par une probabilité de tirage d'une autorisation d'émettre. Une telle probabilité est ainsi affectée à chaque station et à chaque tour de sélection.

Les probabilités sont choisies de préférence de manière à ce que statistiquement le taux de collision soit le plus faible possible.

Une procédure pour choisir les probabilités de façon optimale est présentée dans le document « Analysis et optimization of mac with constant size congestion windows for WLAN » par J. Galtier, Proceedings on the Third International Conference on Services and Networks communications », INRIA, Library of Congress Number 2007930108, August 2007.

Selon un mode de réalisation particulier décrit dans le document de brevet WO2007/051946, les probabilités affectées aux différentes stations lors d'un tour de sélection peuvent être fonction des autorisations ou interdictions d'émettre tirées aux tours de sélection précédents de manière à minimiser le taux de collision.

Les stations 10, 10', 10" comportent chacune un module de gestion d'émission qui permet la mise en oeuvre d'un procédé de régulation d'émission.

Dans la suite de la description les notations suivantes seront utilisées :
- k est l'indice identifiant le tour de sélection au cours d'un tournoi ;
- kₘₐₓ est le nombre maximal de tours de sélection pour un tournoi ;
- r est une variable aléatoire binaire ;
- r(k) est la valeur de la variable aléatoire binaire r tirée au tour de sélection d'indice k ; r(k) appartient à l'ensemble {0 , 1}, la valeur « 1 » étant représentative usuellement d'une autorisation d'émettre, tandis que la valeur « 0 » est représentative d'une interdiction d'émettre.

La suite des r(k) affectée à une station est nommée ici clef.

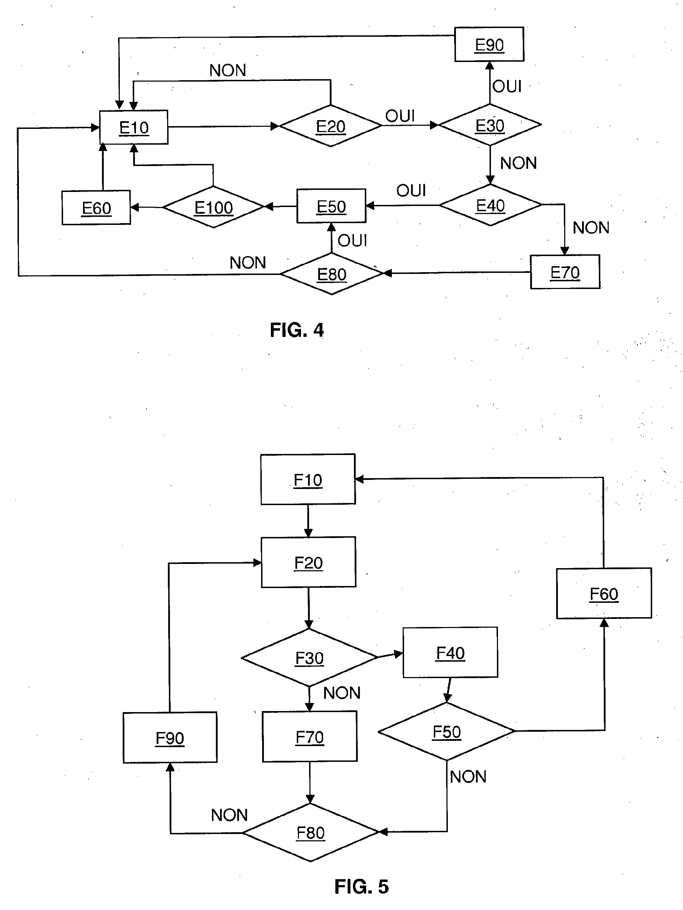

Les principales étapes E10 à E100 et F10 à F90 d'un procédé de régulation d'émission selon l'invention sont décrites en référence aux Figures 4 et 5. Ce procédé est mis en oeuvre par le module de gestion d'émission d'une station 10 ayant au moins un paquet de données à émettre à travers le réseau 1.

Toutes les stations ayant un paquet de données à émettre, mettent en oeuvre simultanément ce même procédé, sans qu'une concertation ou interrogation mutuelle, autre que ce qui est décrit dans les étapes décrites ci-dessous, soit nécessaire entre ces stations.

Le procédé est décrit pour une station 10, toutes les autres stations mettant en oeuvre ce même procédé.

Le procédé décrit par référence à la figure 5 correspond à ce qu'on appelle un tournoi.

Les stations ayant des paquets à émettre démarrent toutes au même instant la procédure de résolution de contention par mise en oeuvre d'un tournoi, cet instant étant fonction d'un critère défini comme suit.

Au cours d'une première étape E10, on suppose que la station 10 décode un paquet de données et qu'elle lit, dans ce paquet, la durée de ce paquet (couche physique) ainsi que l'adresse de destinataire de ce paquet (couche MAC). Avec la durée du paquet, ladite station connaît le temps restant avant la fin du paquet, compte-tenu de la durée de lecture de l'entête MAC. Une durée de temps prédéterminée après la lecture de l'adresse MAC fixe le début du tournoi.

Au cours d'une étape E20, la station 10 détermine si la durée restante du paquet est supérieure à la durée du tournoi.

Si tel n'est pas le cas, dans cet exemple de réalisation, le résultat du test E20 est négatif et la station 10 retourne à l'étape E10 pour attendre la trame de données suivante. Dans un autre mode de réalisation, la station décide de procéder à un tournoi raccourci (par exemple, cinq tours au lieu de six) si la durée du tournoi raccourci est inférieure à la durée restante du paquet.

Au contraire, si la durée de la trame de données est supérieure à la durée du tournoi, le résultat du test E20 est positif.

Ce test est alors suivi par une étape E30 au cours de laquelle la station 10 détermine si elle est destinataire de la trame de données reçue à l'étape E10.

Si tel n'est pas le cas, le résultat du test E30 est négatif, et la station 10 décide, au cours d'une étape E40, si elle doit commencer un tournoi.

Si tel est le cas, le résultat du test E40 est positif.

Cette étape est suivie par une étape E50 au cours de laquelle la station 10 émet un signal porteur d'une signature S1 indiquant qu'elle veut commencer le tournoi.

Au cours de la même étape E50, la station participe à un tournoi, comme décrit maintenant en référence à la **Figure 5**. Le tournoi correspond aux étapes F10 à F90 représentées sur cette figure.

Au cours d'une étape F10, la station 10 initialise une variable k à la valeur 1, cette variable représentant l'indice du tour de sélection courant.

Cette étape F10 d'initialisation est suivie par une étape F20 de tirage d'une valeur r(k) d'une variable aléatoire binaire r, associée à la station pour le tour de sélection courant d'indice k.

La probabilité pour que cette variable aléatoire binaire r(k) prenne, au tour de sélection d'indice k, la valeur prédéterminée « 1 » est notée p(k).

Selon un mode de réalisation, cette probabilité p(k) dépend des valeurs tirées aux tours de sélection précédents.

La probabilité pour que cette variable aléatoire binaire r(k) prenne, au tour k, la valeur prédéterminée « 0 » est donc (1-p(k)).

Cette étape F20 de tirage d'une valeur de variable aléatoire est suivie par une étape F30 au cours de laquelle on vérifie si la valeur binaire r(k) tirée est égale à « 0 ».

Si tel est le cas (cas d'une interdiction d'émettre), ce test F30 est suivi par une étape F40 au cours de laquelle la station 10 écoute le réseau de télécommunication sans fil pour déterminer si une autre station 10', 10" a émis un signal S2 indiquant que cette autre station 10, 10" désire émettre un paquet de données.

Si un tel signal est détecté (résultat du test de l'étape F50 positif), le procédé se termine par l'étape F60, sans que la station 10 ait émis son paquet de données.

Au cours de cette étape F60, la station 10 attend la fin des tours de sélection, écoute les signaux émis par les autres stations. Elle attend la fin du tournoi en mémorisant les informations représentatives émises pendant le tournoi.

En revanche, si à l'étape F40 aucun signal n'est détecté (résultat du test de l'étape F50 négatif), ce test est suivi par un test à l'étape F80 au cours duquel on détermine si le tour k est le dernier tour de sélection, ce qui revient à vérifier si la valeur k est égale à la valeur kₘₐₓ.

Si k est strictement inférieur à kₘₐₓ, le résultat du test de l'étape F80 est négatif. Cette étape est alors suivie par une étape F90 au cours de laquelle on incrémente la valeur de la variable k d'une unité, en vue de l'exécution du tour de sélection suivant.

Si au cours du test de l'étape F30, il est déterminé que la valeur binaire tirée est égale à la valeur prédéterminée 1 (cas d'une autorisation d'émettre), ce test F30 est suivi par une étape F70 d'émission d'un signal indiquant que la station 100 a obtenu une autorisation d'émettre et a l'intention d'émettre un paquet de données via le réseau.

Cette étape F70 d'émission d'un signal est suivie par l'étape F80 déjà décrite au cours de laquelle on vérifie si le tour de sélection courant k est le dernier tour de sélection.

Si tel n'est pas le cas, ce test F80 est suivi par l'étape F90 d'incrémentation déjà décrite.

L'étape F90 d'incrémentation est suivie par une nouvelle exécution des étapes F20 à F80 déjà décrites, pour le tour de sélection suivant et selon la logique d'enchaînement des étapes qui vient d'être décrite.

Au contraire, si le test de l'étape F80 est positif (k= kmax), le tournoi s'achève et la station mémorise une information représentative du fait qu'elle a gagné le tournoi.

Après l'exécution du tournoi (de retour à l'étape générale E50 de la figure 4) le procédé de régulation selon l'invention met en oeuvre une étape E100 au cours de laquelle la station détermine, à partir de l'information mémorisée à l'étape F60 (la station a perdu le tournoi) ou F80 (la station a gagné le tournoi), si elle a gagné ou perdu le tournoi.

Si la station a perdu le tournoi, la station exécute à nouveau l'étape E10 précédemment décrite.

Au contraire, si la station a gagné le tournoi, le procédé de régulation selon l'invention se poursuit avec une étape E60 au cours de laquelle la station envoie une trame de données après avoir détecté une durée de PIFS sans occupation du canal radio. Cette durée apparait typiquement à compter de la fin de l'émission de la trame de données durant laquelle le tournoi a eu lieu, ou à compter de la fin de l'émission de l'acquittement de cette trame.

S'il est déterminé, au cours de l'étape E40, que la station ne désire pas démarrer le tournoi, elle écoute, au cours d'une étape E70, pour déterminer si une autre station a émis le signal S1 représentatif du fait que cette autre station veut démarrer le tournoi.

Si tel est le cas, le résultat d'un test E80 est positif. Ce test est suivi par l'étape E50 déjà décrite au cours de laquelle la station 10 peut décider de joindre le tournoi en mettant en oeuvre l'étape E50 déjà décrite.

Au contraire, si aucune station ne désire participer au tournoi, le résultat du test E80 est négatif et la station 10 peut mettre en oeuvre l'étape E10 déjà décrite.

S'il est déterminé, à l'étape E30, que la station 10 est destinataire de la trame de données reçue à l'étape E10, cette étape E30 est suivie par une étape E90 au cours de laquelle la station 10 lit la trame de données et émet un acquittement après la période d'attente SIFS, suivant le procédé classique de IEEE 802.11.

Mais dans l'exemple de réalisation décrit ici, elle ne peut pas participer au tournoi.

Cette étape E90 est suivie par l'étape E10 déjà décrite.

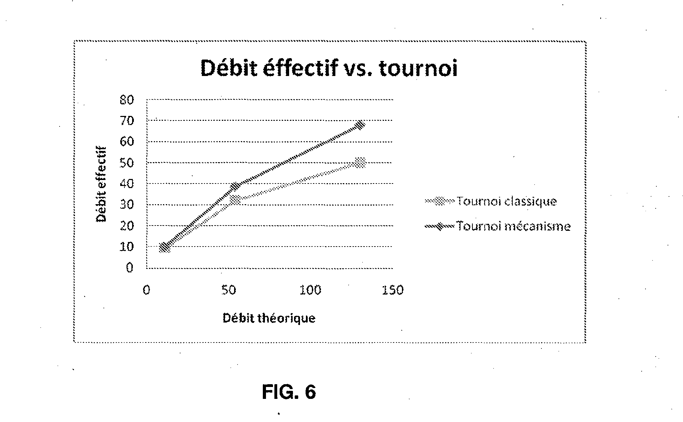

La Figure 6 illustre l'intérêt de l'invention lorsqu'elle est mise en oeuvre sur un réseau fonctionnant sur la base de la norme 802.11n. Plus précisément, elle présente les débits effectifs obtenus avec et sans la mise en oeuvre du procédé de régulation selon l'invention pour des débits théoriques de 11,54 et 130 mégabits par seconde lorsque l'on met en oeuvre un tournoi à six tours de sélection,
- selon ce qui est décrit dans le document WO 2009/095628 aux pages 7 et 8 (méthode dite du « Tournoi classique » dans la légende de la figure 6 de cette présente demande) d'une part, et
- suivant la présente invention (dite « Tournoi mécanisme » dans la légende de la figure 6 de cette présente demande) d'autre part.

### Autre mode de réalisation de l'invention

La description qui vient d'être faite en référence aux figures 1 à 6 concerne le mode de réalisation de l'invention dans lequel une station attend la réception d'une trame de données suffisamment longue pour que tout le tournoi puisse être joué au cours de cette trame.

En variante, on peut commencer à jouer un tournoi simultanément à la réception d'une trame de données trop courte pour le tournoi, et suspendre le tournoi pour le reprendre après une période de silence incompressible.

Dans ce cas, l'étape E20 n'est pas nécessaire. Le tournoi est suspendu à la fin de la période d'émission du paquet en cours. Après une période de silence SIFS, définie dans la norme 802.11, la station écoute l'acquittement éventuel de l'émission courante. Dès qu'une période d'attente PIFS est observée, soit à la fin du paquet courant s'il n'y a pas d'acquittement, soit à la fin de l'acquittement, la station émet un bit de bourrage signalant aux autres stations la reprise du tournoi suspendu. La suite du tournoi s'effectue alors, suivant la méthode connue des tournois, décrite notamment dans le document WO 2009/095628 aux pages 7-8 et 20.

Le fait de permettre l'exécution en parallèle en partie au moins d'un tournoi et de l'émission d'une trame de données, permet de réduire le temps total d'occupation du canal consommé par le tournoi dans la méthode connue des tournois, telle que décrite dans le document WO 2009/095628 précité.

A la reprise du tournoi, il faut mettre en oeuvre les moyens pour éviter que les stations n'implémentant pas le mécanisme selon l'invention n'interfèrent pas avec le tournoi en cours. Un moyen d'atteindre cet objectif est par exemple d'interdire d'avoir des clefs avec un nombre important de valeurs de r(k) consécutives égales à 0 : en effet ceci créerait une période de silence, pouvant faire croire aux stations n'implémentant pas le mécanisme selon l'invention que le canal radio est libre.

L'homme de métier comprendra que le nombre total de clefs offertes par le tournoi décrit dans cette variante est égal au nombre des clefs possibles avant l'interruption du tournoi, multiplié par le nombre de clefs possibles après l'interruption. En conséquence, le départage en station permis par cette variante n'est pas moins performant du fait de l'interruption du tournoi qu'un tournoi effectué d'un seul tenant.

Dans un autre mode de réalisation de l'invention, on utilise, pour jouer le tournoi, une fréquence suffisamment éloignée de la fréquence utilisée pour l'émission des trames de données dans le réseau.

Dans un tel mode de réalisation, les éléments d'information du tournoi peuvent être envoyés sans qu'il soit nécessaire de vérifier si une trame de données est reçue ou non sur le réseau.

En conséquence, dans ce mode de réalisation, le procédé consiste en exécution des étapes F5 à F80, l'émission d'une trame de données étant effectuée par la station qui a gagné le tournoi à l'issue de l'étape F80 sans précaution particulière, lorsque le résultat de cette étape F80 est positif (k = kₘₐₓ).

Dans chacun des modes de réalisation de l'invention, les tournois peuvent alterner avec des périodes de contentions classiques de façon à ce que les stations n'implémentant pas l'invention puissent émettre à leur tours

## Revendications

1. Procédé de régulation d'émission pouvant être mis en oeuvre par une station (10) ayant au moins une trame de données à émettre via un réseau (1) de télécommunication sans fil, le procédé comportant, à chaque tour (k) de sélection d'un nombre maximal de tours de sélection:
- une étape d'obtention d'une valeur (r(k)) représentative soit d'une autorisation d'émettre soit d'une interdiction d'émettre ladite trame ; et lorsque ladite valeur est représentative d'une autorisation d'émettre :
- une étape (F70) d'émission d'un signal d'information dans ledit réseau, pour indiquer aux autres stations (10', 10") que ladite station (10) a obtenu une valeur représentative d'une autorisation d'émettre ;
ledit procédé étant **caractérisé en ce que** l'émission (F70) dudit signal d'information est effectuée au moins en partie pendant l'émission d'une trame de données dans ledit réseau.

2. Procédé de régulation selon la revendication 1, **caractérisé en ce que** l'émission dudit signal est effectuée en utilisant une bande de fréquences suffisamment éloignée de celle utilisée pour l'émission desdites trames de données pour que ladite station (10) puisse émettre l'élément d'information tout en étant capable de recevoir une trame de données.

3. Procédé de régulation selon la revendication 1, **caractérisé en ce que** l'émission dudit élément d'information est effectuée en utilisant la bande de fréquence utilisée pour l'émission desdites trames de données, l'émission dudit élément d'information étant initié après la réception de l'adresse du destinataire comprise dans ladite trame de données, ledit signal d'information étant signé avec une signature propre aux signaux d'information.

4. Procédé de régulation selon la revendication 3, **caractérisé en ce qu'**il comporte une étape (E20) d'attente d'une trame de données suffisamment longue pour émettre entièrement ledit signal d'information pendant l'émission de ladite trame.

5. Procédé de régulation selon la revendication 1, **caractérisé en ce que** l'émission dudit signal d'information est effectuée avec une puissance comparable au niveau du bruit en utilisant la totalité des canaux de la bande de fréquences utilisée pour l'émission desdites trames de données, au moins un desdits canaux n'étant pas utilisé pour l'émission desdites trames de données.

6. Procédé de régulation selon la revendication 1, **caractérisé en ce que** l'émission dudit signal d'information commence ou redémarre après un temps de silence (PIFS) déterminé compté après la fin de l'émission d'une trame de données, l'émission dudit signal d'information étant effectué avec une puissance permettant aux autres stations de détecter l'occupation du canal de transmission.

7. Procédé de régulation selon la revendication 1, **caractérisé en ce que** le nombre maximal de tours de sélection à effectuer est réduit si la durée de l'émission de la trame de donnée est inférieure à la durée dudit nombre maximal de tours de sélection.

8. Dispositif (100) de régulation d'émission pour une station ayant au moins une trame de données à émettre via un réseau de télécommunication sans fil, le dispositif comportant :
- des moyens pour obtenir, à chacun d'une pluralité d'un nombre maximal de tours de sélection, une valeur représentative soit d'une autorisation d'émettre soit d'une interdiction d'émettre ladite trame ; et lorsque ladite valeur est représentative d'une autorisation d'émettre ;
- des moyens d'émission d'un signal d'information dans ledit réseau, pour indiquer aux autres stations que ladite station a obtenu une valeur représentative d'une autorisation d'émettre;
ledit dispositif étant **caractérisé en ce que** lesdits moyens d'émission sont aptes à émettre ledit signal d'information de sorte que ladite émission est effectuée au moins en partie pendant l'émission d'une trame de données dans ledit réseau.

9. Programme informatique comportant des instructions logicielles pour la mise en oeuvre d'un procédé selon l'une quelconque des revendications 1 à 7, lorsque ledit programme est exécuté par un processeur de données.

10. Support d'enregistrement lisible par un processeur de données sur lequel est enregistré un programme comportant des instructions de code de programme pour l'exécution des étapes d'un procédé selon l'une quelconque des revendications 1 à 7.

## Patentansprüche

1. Übertragungssteuerungsverfahren, das von einer Station (10) eingesetzt werden kann, die mindestens einen über ein drahtloses Telekommunikationsnetzwerk (1) zu sendenden Datenraster hat, wobei das Verfahren bei jeder Auswahlrunde (k) einer maximalen Anzahl von Auswahlrunden umfasst:
- einen Schritt des Erhalts eines Wertes (r(k)), der entweder für eine Sendegenehmigung oder ein Sendeverbot des Rasters repräsentativ ist; und wenn der Wert für eine Sendegenehmigung repräsentativ ist:
- einen Schritt (F70) des Sendens eines Informationssignals in das Netzwerk, um den anderen Stationen (10', 10") anzuzeigen, dass die Station (10) einen für eine Sendegenehmigung repräsentativen Wert erhalten hat;
wobei das Verfahren **dadurch gekennzeichnet ist, dass** das Senden (F70) des Informationssignals zumindest teilweise während des Sendens eines Datenrasters in das Netzwerk erfolgt.

2. Steuerungsverfahren nach Anspruch 1, **dadurch gekennzeichnet, dass** das Senden des Signals unter Verwendung eines Frequenzbandes erfolgt, das weit genug von jenem entfernt ist, das für das Senden der Datenraster verwendet wird, damit die Station (10) das Informationselement senden kann und gleichzeitig in der Lage ist, einen Datenraster zu empfangen.

3. Steuerungsverfahren nach Anspruch 1, **dadurch gekennzeichnet, dass** das Senden des Informationselements unter Verwendung des Frequenzbandes erfolgt, das für das Senden der Datenraster verwendet wird, wobei das Senden des Informationselements nach dem Empfang der Adresse des Empfängers, die in dem Datenraster enthalten ist, initiiert wird, wobei das Informationssignal mit einer den Informationssignalen eigenen Signatur signiert ist.

4. Steuerungsverfahren nach Anspruch 3, **dadurch gekennzeichnet, dass** es einen Schritt (E20) des Wartens auf einen Datenraster umfasst, der lang genug ist, um das Informationssignal während des Sendens des Rasters zur Gänze zu senden.

5. Steuerungsverfahren nach Anspruch 1, **dadurch gekennzeichnet, dass** das Senden des Informationssignals mit einer mit dem Lärmniveau vergleichbaren Leistung erfolgt, wobei die Gesamtheit der Kanäle des Frequenzbandes, das für das Senden der Datenraster verwendet wird, eingesetzt werden, wobei mindestens einer der Kanäle nicht für das Senden der Datenraster verwendet wird.

6. Steuerungsverfahren nach Anspruch 1, **dadurch gekennzeichnet, dass** das Senden des Informationssignals nach einer bestimmten Ruhezeit (PIFS) beginnt oder wieder beginnt, die nach dem Ende des Sendens eines Datenrasters gezählt wird, wobei das Senden des Informationssignals mit einer Leistung erfolgt, die es den anderen Stationen ermöglicht, die Belegung des Übertragungskanals zu erkennen.

7. Steuerungsverfahren nach Anspruch 1, **dadurch gekennzeichnet, dass** die maximale Anzahl von durchzuführenden Auswahlrunden verringert ist, wenn die Dauer des Sendens des Datenrasters geringer als die Dauer der maximalen Anzahl von Auswahlrunden ist.

8. Vorrichtung (100) zur Übertragungssteuerung für eine Station, die mindestens einen über ein drahtloses Telekommunikationsnetzwerk zu entsendenden Datenraster hat, wobei die Vorrichtung umfasst:
- Mittel, um an jeder aus einer Vielzahl einer maximalen Anzahl von Auswahlrunden einen Wert zu erhalten, der entweder für eine Sendegenehmigung oder für ein Sendeverbot des Rasters repräsentativ ist; und wenn der Wert für eine Sendegenehmigung repräsentativ ist:
- Mittel zum Senden eines Informationssignals in dem Netzwerk, um den anderen Stationen anzuzeigen, dass die Station einen für eine Sendegenehmigung repräsentativen Wert erhalten hat;
wobei die Vorrichtung **dadurch gekennzeichnet ist, dass** die Sendemittel dazu geeignet sind, das Informationssignal zu entsenden, so dass das Senden zumindest teilweise während des Sendens eines Datenrasters in dem Netzwerk erfolgt.

9. Informatikprogramm, umfassend Softwarebefehle für den Einsatz eines Verfahrens nach einem der Ansprüche 1 bis 7, wenn das Programm von einem Datenprozessor ausgeführt wird.

10. Aufzeichnungsträger, der von einem Datenprozessor lesbar ist, auf dem ein Programm aufgezeichnet ist, umfassend Programmcodebefehle für die Ausführung der Schritte eines Verfahrens nach einem der Ansprüche 1 bis 7.

## Claims

1. Transmission regulation method that can be implemented by a station (10) having at least one data frame to be transmitted via a wireless telecommunication network (1), the method comprising, on each selection turn (k) of a maximum number of selection turns:
- a step of obtaining a value (r(k)) representative either of an authorisation to transmit or of a prohibition to transmit said frame; and, when said value is representative of an authorisation to transmit:
- a step (F70) of transmitting an information signal in said network, to indicate to the other stations (10', 10") that said station (10) has obtained a value representative of an authorisation to transmit;
said method being **characterized in that** the transmission (F70) of said information signal is performed at least partly during the transmission of a data frame in said network.

2. Regulation method according to Claim 1, **characterized in that** the transmission of said signal is performed by using a frequency band sufficiently far from that used for the transmission of said data frames for said station (10) to be able to transmit the information element while being capable of receiving a data frame.

3. Regulation method according to Claim 1, **characterized in that** the transmission of said information element is performed by using the frequency band used for the transmission of said data frames, the transmission of said information element being initiated after the reception of the address of the recipient contained in said data frame, said information signal being signed with a signature specific to the information signals.

4. Regulation method according to Claim 3, **characterized in that** it comprises a step (E20) of waiting for a data frame that is sufficiently long to transmit all of said information signal during the transmission of said frame.

5. Regulation method according to Claim 1, **characterized in that** the transmission of said information signal is performed with a power comparable to the level of the noise by using all of the channels of the frequency band used for the transmission of said data frames, at least one of said channels not being used for the transmission of said data frames.

6. Regulation method according to Claim 1, **characterized in that** the transmission of said information signal begins or restarts after a determined silence time (PIFS) counted after the end of the transmission of a data frame, the transmission of said information signal being performed with a power that enables the other stations to detect the occupancy of the transmission channel.

7. Regulation method according to Claim 1, **characterized in that** the maximum number of selection turns to be performed is reduced if the duration of the transmission of the data frame is less than the duration of said maximum number of selection turns.

8. Transmission regulation device (100) for a station having at least one data frame to be transmitted via a wireless telecommunication network, the device comprising:
- means for obtaining, on each of a plurality of a maximum number of selection turns, a value representative either of an authorisation to transmit or of a prohibition to transmit said frame; and, when said value is representative of an authorisation to transmit;
- means for transmitting an information signal in said network, to indicate to the other stations that said station has obtained a value representative of an authorisation to transmit;
said device being **characterized in that** said transmission means are suitable for transmitting said information signal such that said transmission is performed at least partly during the transmission of a data frame in said network.

9. Computer program comprising software instructions for the implementation of a method according to any one of Claims 1 to 7, when said program is run by a data processor.

10. Storage medium that can be read by a data processor on which is stored a program comprising program code instructions for the execution of the steps of a method according to any one of Claims 1 to 7.
